# EUROPEAN PATENT APPLICATION

(11) **EP 4 787 610 A1**
(43) Date of publication of application: **05.08.2026**
(21) Application number: 25849635.5
(22) Date of filing: 31.12.2025
(51) Int. Cl.: H01M 50/545

(54) **CHARGING-PORT-FREE RECHARGEABLE LITHIUM BATTERY AND MANUFACTURING METHOD THEREFOR**

(30) Priority: 08.01.2025 CN 202510029984
(71) Applicant: Hamedata Technology Co., Limited, Shenzhen, Guangdong 518118 (CN)
(72) Inventor: XIAO, Pengfei, Shenzhen, Guangdong 518118 (CN); YANG, Changjun, Shenzhen, Guangdong 518118 (CN); XU, Guohao, Shenzhen, Guangdong 518118 (CN); XIAO, Hong, Shenzhen, Guangdong 518118 (CN); WU, Yi, Shenzhen, Guangdong 518118 (CN)
(74) Representative: Ullrich & Naumann PartG mbB
(86) International application number: PCT/CN2025/147983
(87) International publication number: WO 2026/124686

(57) **Abstract**

The present application discloses a rechargeable lithium battery without a charging port and a manufacturing method thereof. The lithium battery includes a first negative electrode metal casing, a voltage regulation circuit board, a low-voltage positive electrode cap, a high-voltage positive electrode connector, a lithium battery cell, a low-voltage positive/negative electrode insulating spacer, and an insulating housing, wherein an upper end of the first negative electrode metal casing is inwardly provided with a first flange; an upper surface of the voltage regulation circuit board is provided with a negative electrode copper ring and a positive electrode copper ring; the voltage regulation circuit board is welded to an inner side of the first flange of the first negative electrode metal casing through the negative electrode copper ring; and the high-voltage positive electrode connector is arranged on an inner surface of the voltage regulation circuit board. The lithium battery of the present application can stably output a low voltage; the voltage regulation circuit board is welded to the inner side of the first flange, the electrical connection performance is very reliable, and sealing is achieved through solder; no insulating bracket needs to be arranged below the voltage regulation circuit board for support, eliminating the insulating bracket, compressing the height space occupied by the voltage regulation circuit board, and increasing the capacity of the lithium battery cell by increasing the length of the lithium battery cell.

## Description

### TECHNICAL FIELD

The present application relates to the technical field of lithium batteries, in particular to a rechargeable lithium battery without a charging port and a manufacturing method thereof.

### BACKGROUND ART

Owing to multiple advantages such as high energy density, no memory effect, and fast charging capability, rechargeable lithium batteries have become a preferred power source in modern electronic devices, electric vehicles, and other applications.

The existing rechargeable AA or AAA lithium batteries, if designed with a charging port, offer the convenience of direct plug-in charging. However, the presence of an opening for the charging port also results in insufficient battery stability and inferior full-body waterproof performance compared with the version without a charging port. Although the version without a charging port is completely isolated from the outside and thus features high stability and excellent waterproof performance, the original positive and negative electrodes of the lithium battery can be used for charging, which complicates the structure of non-cell components inside the battery and requires more space originally reserved for the battery cell. Consequently, for AA or AAA batteries of the same specified size, the proportion of the actually functional battery cell decreases. Therefore, the capacity of the rechargeable battery without a charging port is smaller than that of a conventional rechargeable battery, and further improvement is still required.

### SUMMARY

In order to reduce the volume proportion of the non-cell components of the rechargeable lithium battery without a charging port and increase the capacity of the rechargeable lithium battery without a charging port, the present application provides a rechargeable lithium battery without a charging port and a manufacturing method thereof.

In a first aspect, an invention objective of the present application is achieved by the following technical solutions:

A rechargeable lithium battery without a charging port includes: a first negative electrode metal casing, a voltage regulation circuit board, a low-voltage positive electrode cap, a high-voltage positive electrode connector, a lithium battery cell and a low-voltage positive/negative electrode insulating spacer, wherein an upper end of the first negative electrode metal casing is inwardly provided with a first flange; an upper surface of the voltage regulation circuit board is provided with a negative electrode copper ring and a positive electrode copper ring; the voltage regulation circuit board is welded to an inner side of the first flange on the first negative electrode metal casing through the negative electrode copper ring; the voltage regulation circuit board is provided with a rechargeable circuit without a charging port; the low-voltage positive electrode cap is welded to the positive electrode copper ring; the high-voltage positive electrode connector is arranged on an inner surface of the voltage regulation circuit board; the lithium battery cell includes a second negative electrode metal casing and a high-voltage positive electrode cap assembly, wherein the first negative electrode metal casing and the second negative electrode metal casing are electrically connected through butt joint or socket joint; the high-voltage positive electrode connector is in elastic contact with the high-voltage positive electrode cap assembly; and the low-voltage positive/negative electrode insulating spacer is arranged above the first flange of the first negative electrode metal casing.

By adopting the above technical solution, a rechargeable lithium battery product without a charging port featuring tighter coordination between its various components, compact size and higher capacity is provided. In the present application, a low-voltage positive electrode cap serves as a positive electrode of the battery, and the second negative electrode metal casing of the lithium battery cell serves as a negative electrode of the battery, which can stably output a low voltage of 1.5 V or other specific low voltages. Different from a negative electrode connection method in the prior art that uses pogo pins to connect the voltage regulation circuit board and the second negative electrode metal casing, in the present application, while a positive electrode copper ring is directly arranged on the upper surface, a negative electrode copper ring is also arranged thereon. Then, the voltage regulation circuit board is welded to an inner side of the first flange of the first negative electrode metal casing by means of welding. In this way, the voltage regulation circuit boards are electrically connected to the second negative electrode metal casing through the first negative electrode metal casing in sequence, that is, electrically connected to the negative electrode of the lithium battery cell. This improves the electrical connection performance between the voltage regulation circuit board and the first negative electrode metal casing, and completely eliminates the technical problem of poor contact. At the same time, there will be no gap between the first negative electrode metal casing and the voltage regulation circuit board, no gluing is required, the sealing effect can be achieved by solder, and waterproof and dustproof effects can be further achieved. Secondly, the voltage regulation circuit board is fixed very firmly. Further, no insulating bracket needs to be arranged under the voltage regulation circuit board for support, eliminating the insulating bracket, reducing the number of components, and eliminating a step of assembling the insulating bracket. More importantly, the height space occupied by the voltage regulation circuit board is extremely compressed. The space originally occupied by the insulating bracket can be filled by increasing the length of the lithium battery cell, thereby being conducive to achieving the technical purpose of further increasing the capacity of the lithium battery cell.

In a preferred example of the present application, the lithium battery cell further includes a wound cell assembly. The wound cell assembly includes a wound cell, a battery positive tab and a battery negative tab; the wound cell is welded to the high-voltage positive electrode cap assembly through the battery positive tab; the battery negative tab is wound from a side surface of the wound cell to a bottom surface and is connected to the wound cell; the rechargeable circuit without a charging port is provided with a step-down charging management module and a battery protection module; the step-down charging management module is connected to the battery protection module; a battery voltage input terminal of the step-down charging management module is connected to the wound cell; an output power terminal of the step-down charging management module is connected to the battery positive tab; a power terminal of the battery protection module is connected to the battery positive tab and the battery negative tab; and a battery voltage input terminal of the battery protection module is connected to the wound cell.

In a preferred example of the present application, the step-down charging management module includes a step-down charging management chip and a filter circuit unit, wherein a battery voltage input pin of the step-down charging management chip is connected to a positive electrode of the wound cell; the filter circuit unit includes a first filter capacitor, a second filter capacitor and a first inductor; the battery voltage input pin of the step-down charging management chip is connected in series with the first filter capacitor and then grounded; a switch node (SW) pin of the step-down charging management chip is connected in series with the first inductor and the second filter capacitor in sequence and then grounded; and a voltage output (VOUT) pin of the step-down charging management chip is connected to the SW pin through the first inductor.

In a preferred example of the present application, a model of the step-down charging management chip is IP5167.

In a preferred example of the present application, the battery protection module includes a battery protection chip and a protective filter capacitor; a battery voltage input pin of the battery protection chip is connected to the wound cell and the step-down charging management module; a voltage drain drain (VDD) pin of the battery protection chip is connected to the battery positive tab; and a voltage collector collector (VCC) pin of the battery protection chip is connected in series with the protective filter capacitor and is connected to the battery negative tab.

In a preferred example of the present application, the model of the battery protection chip is BP6452LC.

In a preferred example of the present application, an upper portion of the second negative electrode metal casing is defined with an annular rolled groove, and a top of the second negative electrode metal casing is provided with a second flange; the wound cell assembly is arranged in the second negative electrode metal casing and a position of the wound cell assembly is constrained by the annular rolled groove; the second negative electrode metal casing is divided by the annular rolled groove into a lower body portion and an upper contraction portion; an outer diameter of the first negative electrode metal casing is the same as that of the body portion of the second negative electrode metal casing; an inner diameter of the first negative electrode metal casing is the same as an outer diameter of a contraction portion of the second negative electrode metal casing; the contraction portion of the second negative electrode metal casing is embedded into the first negative electrode metal casing; and an outer surface of the first negative electrode metal casing is flush with an outer surface of the second negative electrode metal casing.

In a preferred example of the present application, the high-voltage positive electrode connector is a pogo pin, a conical spring or an elastic shrapnel.

In a preferred example of the present application, the rechargeable lithium battery without a charging port further includes an insulating housing, wherein the insulating housing encapsulates the first negative electrode metal casing, the second negative electrode metal casing and the low-voltage positive/negative electrode insulating spacer.

In a second aspect, the invention objective of the present application is achieved by adopting the following technical solutions:

A method for manufacturing the rechargeable lithium battery without a charging port as described above includes the following steps:
fabricating the first negative electrode metal casing and forming a first flange at the top of the first negative electrode metal casing;
welding the voltage regulation circuit board programmed with the rechargeable circuit without a charging port to the inner side of the first flange of the first negative electrode metal casing;
butt-jointing the second negative electrode metal casing of the lithium battery cell with the first negative electrode metal casing, or embedding the second negative electrode metal casing into the first negative electrode metal casing, and then welding and fixing the first negative electrode metal casing and the second negative electrode metal casing;
placing or pasting the low-voltage positive/negative electrode insulating spacer on an outer side of the first flange of the first negative electrode metal casing; and
slipping the insulating housing and performing heat shrinking on the insulating housing, such that the insulating housing wraps around the low-voltage positive/negative electrode insulating spacer, the first negative electrode metal casing, and the lithium battery cell for voltage regulation.

In summary, the present application includes at least one of the following beneficial technical effects:
1. The present application provides a rechargeable lithium battery product without a charging port featuring tighter coordination between its various components, compact size and higher capacity. Different from the connection method in the prior art that uses elastic connectors (such as pogo pins) to connect the voltage regulation circuit board and the negative electrode metal casing, in the present application, no insulating bracket needs to be arranged under the voltage regulation circuit board for support, eliminating the insulating bracket, reducing the number of components, and eliminating a step of assembling the insulating bracket. More importantly, the height space occupied by the voltage regulation circuit board is extremely compressed, which is beneficial to increasing the battery capacity of the lithium battery cell.
2. The rechargeable lithium battery without a charging port achieves efficient, safe, and reliable battery management and protection functions through a carefully designed step-down charging management module and battery protection module, and optimizes space utilization and design complexity. By using the step-down charging management chip of model IP5167, efficient management of the battery voltage is realized. IP5167 can not only provide accurate constant-current and constant-voltage charging modes, but also ensure the safety of the charging process and prevent risks caused by over-charging and excessive temperature.
3. The battery protection chip cooperates with a protective filter capacitor to provide comprehensive battery protection functions, including but not limited to over-charging, over-discharging, over-current and short-circuit protection.

### BRIEF DESCRIPTION OF THE DRAWINGS

FIG. 1 shows an overall installation structure diagram and assembly diagram of a rechargeable lithium battery without a charging port in an embodiment of the present application.
FIG. 2 is a cross-sectional view of an overall structure of the rechargeable lithium battery without a charging port in the embodiment of the present application.
FIG. 3 is a partial enlarged view of A in FIG. 2.
FIG. 4 is a schematic diagram of the disassembly and assembly of a first negative electrode metal casing, a voltage regulation circuit board, a low-voltage positive electrode cap, a high-voltage positive electrode connector, and a low-voltage positive/negative electrode insulating spacer in the rechargeable lithium battery without a charging port in the embodiment of the present application.
FIG. 5 is a schematic diagram of the structural assembly of a lithium battery cell in the rechargeable lithium battery without a charging port in the embodiment of the present application.
FIG. 6 is a circuit diagram of a step-down charging management module and a battery protection module in a voltage regulation circuit board of the rechargeable lithium battery without a charging port in the embodiment of the present application.

### Reference signs in the drawings:

1. first negative electrode metal casing; 11. first flange; 2. voltage regulation circuit board; 21. negative electrode copper ring; 22. positive electrode copper ring; 23. step-down charging management module; 24. battery protection module; 3. low-voltage positive electrode cap; 4. high-voltage positive electrode connector; 5. lithium battery cell; 51. second negative electrode metal casing; 511. annular rolled groove; 512. second flange; 52. high-voltage positive electrode cap assembly; 53. wound cell assembly; 531. wound cell; 532. battery positive tab; 533. battery negative tab; 534. upper diaphragm; 535. lower diaphragm; 6. low-voltage positive/negative electrode insulating spacer; 7. insulating housing; 8. high-voltage positive/negative electrode insulating spacer.

### DETAILED DESCRIPTION

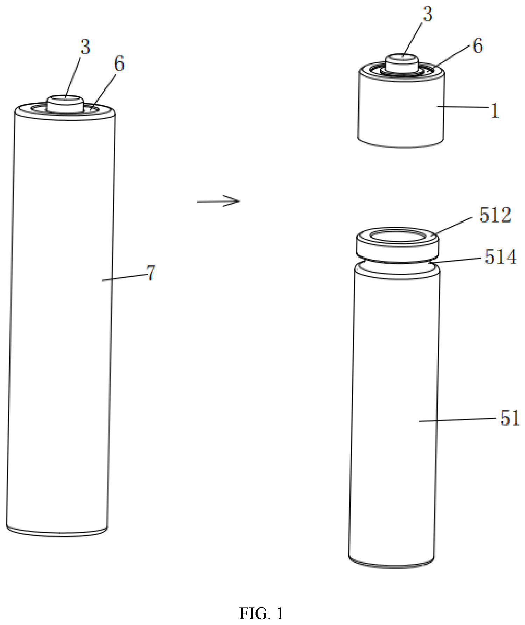

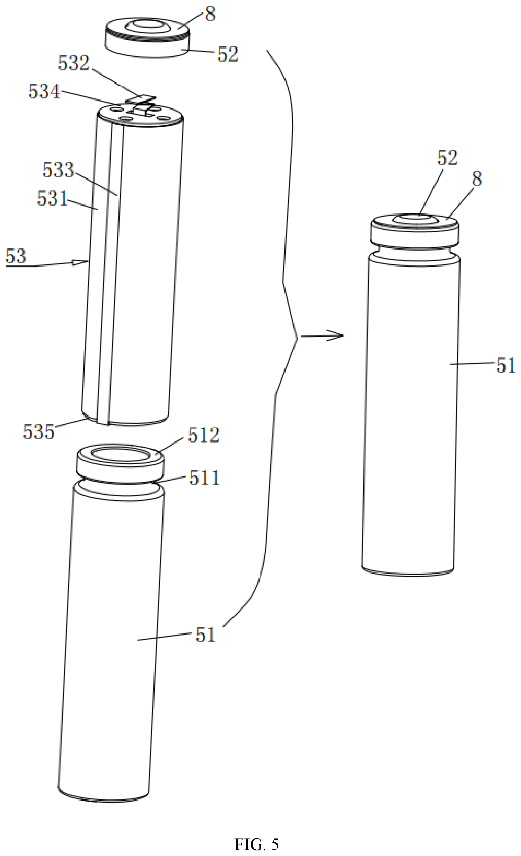

The present application will be described in further detail below with reference to FIGS. 1 to 6.

In one embodiment, as shown in FIGS. 1 to 6, the present application discloses a rechargeable lithium battery without a charging port, specifically an AA battery (No. 5 battery) or an AAA battery (No. 7 battery). The rechargeable lithium battery without a charging port includes a first negative electrode metal casing 1, a voltage regulation circuit board 2, a low-voltage positive electrode cap 3, a high-voltage positive electrode connector 4, a lithium battery cell 5, a low-voltage positive/negative electrode insulating spacer 6, and an insulating housing 7.

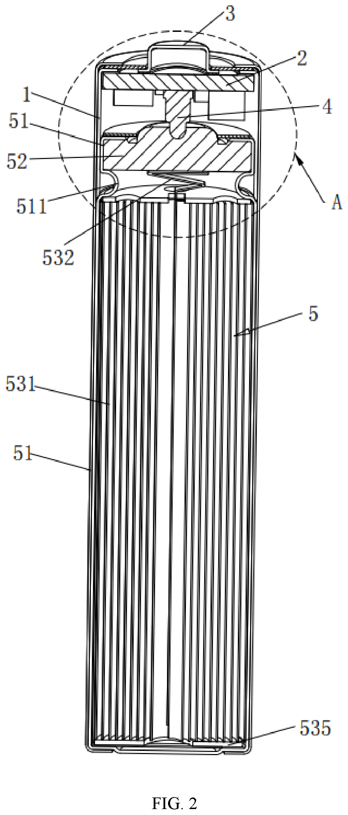

As shown in FIGS. 2 to 4, an upper end of the first negative electrode metal casing 1 is inwardly provided with a first flange 11; an upper surface of the voltage regulation circuit board 2 is provided with a negative electrode copper ring 21 and a positive electrode copper ring 22; the voltage regulation circuit board 2 is welded to an inner side of the first flange 11 on the first negative electrode metal casing 1 through the negative electrode copper ring 21; the voltage regulation circuit board 2 is provided with a rechargeable circuit without a charging port; the low-voltage positive electrode cap 3 is welded to the positive electrode copper ring 22; the high-voltage positive electrode connector 4 is arranged on an inner surface of the voltage regulation circuit board 2; the lithium battery cell 5 includes a second negative electrode metal casing 51 and a high-voltage positive electrode cap assembly 52, wherein the first negative electrode metal casing 1 and the second negative electrode metal casing 51 are electrically connected through butt joint or socket joint; the high-voltage positive electrode connector 4 is in elastic contact with the high-voltage positive electrode cap assembly 52; the low-voltage positive/negative electrode insulating spacer 6 is arranged above the first flange 11 of the first negative electrode metal casing 1, and the insulating housing 7 encapsulates the first negative electrode metal casing 1; and the second negative electrode metal casing 51 and the low-voltage positive/negative electrode insulating spacer 6.

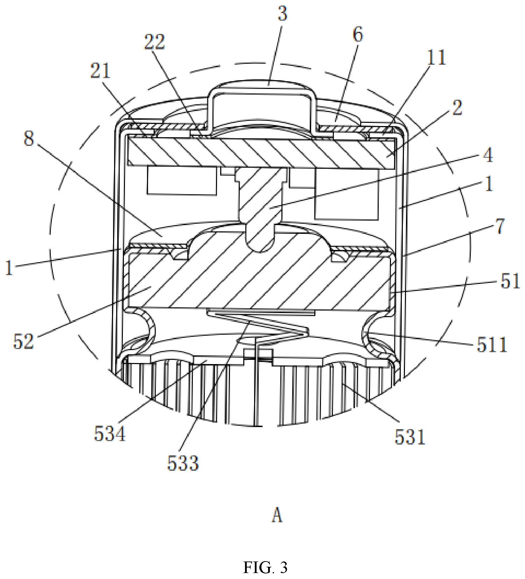

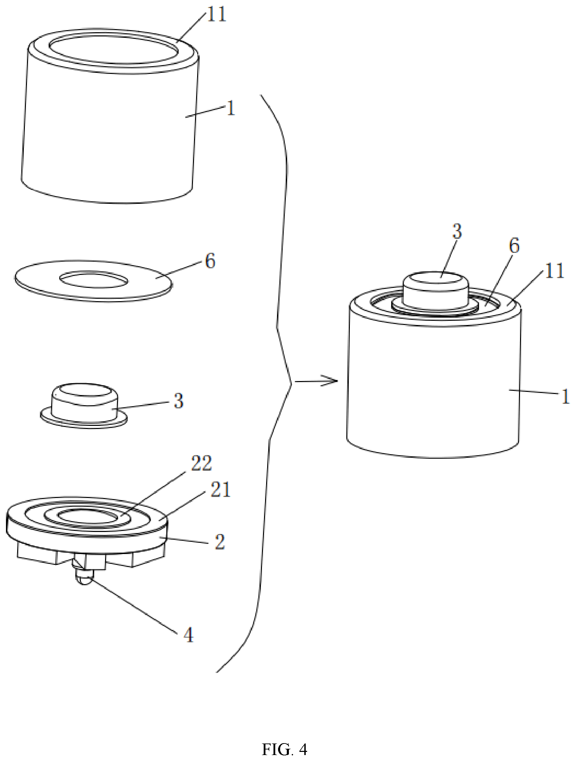

As shown in FIGS. 3 and 4, the high-voltage positive electrode connector 4 is a pogo pin. In this embodiment, the high-voltage positive electrode connector 4 can also be an elastic structure such as a conical spring or an elastic shrapnel, which can achieve the same function of elastic contact and electrical conduction.

As shown in FIGS. 2 to 5, the lithium battery cell 5 further includes a wound cell assembly 53. The wound cell assembly 53 includes a wound cell 531, a battery positive tab 532, a battery negative tab 533, an upper diaphragm 534 and a lower diaphragm 535; the wound cell 531 is welded to the high-voltage positive electrode cap assembly 52 through the battery positive tab 532; the battery negative tab 533 is wound from a side surface of the wound cell 531 to the bottom surface and is connected to the wound cell 531. Specifically, the battery positive tab 532 passes through a central hole of the upper diaphragm 534 and is welded to a lower end of the high-voltage positive electrode cap assembly 52; the battery negative tab 533 is welded to a bottom surface of the lower diaphragm 535; and the upper diaphragm 534 and the lower diaphragm 535 can provide short-circuit protection for the lithium battery cell 5. An upper portion of the second negative electrode metal casing 51 is defined with an annular rolled groove 511, and a top of the second negative electrode metal casing 51 is provided with a second flange 512; the wound cell assembly 53 is arranged in the second negative electrode metal casing 51 and a position of the wound cell assembly 53 is constrained by the annular rolled groove 511; the second negative electrode metal casing 51 is divided by the annular rolled groove 511 into a lower body portion and an upper contraction portion; an outer diameter of the first negative electrode metal casing 1 is the same as that of the body portion of the second negative electrode metal casing 51, and an inner diameter of the first negative electrode metal casing 1 is the same as an outer diameter of a contraction portion of the second negative electrode metal casing 51; the contraction portion of the second negative electrode metal casing 51 is embedded into the first negative electrode metal casing 1; and an outer surface of the first negative electrode metal casing 1 is flush with an outer surface of the second negative electrode metal casing 51. In this way, the outer diameter of the entire lithium battery is uniform, and no steps will be generated. In this embodiment, a high-voltage positive/negative electrode insulating spacer 8 is attached to the second flange 512 at the top of the second negative electrode metal shell 51 to ensure electrical safety.

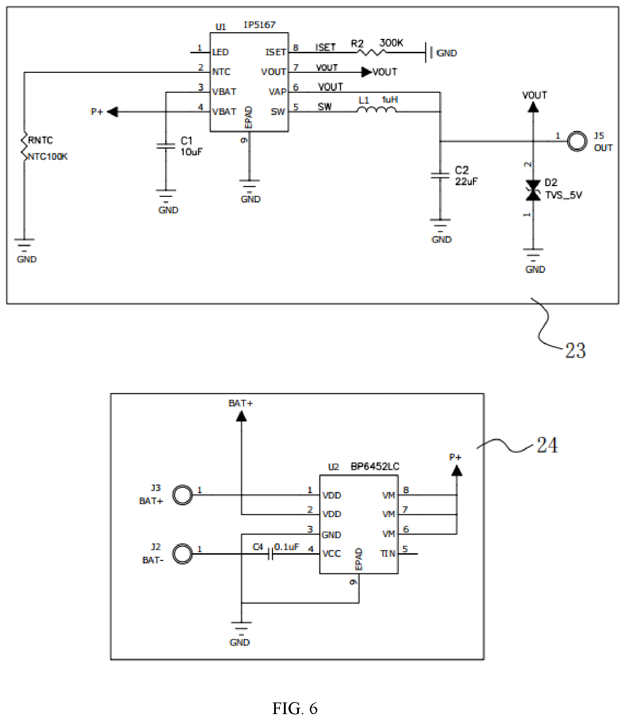

As shown in FIG. 6, taking the circuit diagram shown in FIG. 6 as an example, the voltage regulation circuit board 2 is provided with a step-down charging management module 23 and a battery protection module 24; wherein the step-down charging management module 23 is connected to the battery protection module 24; a battery voltage input terminal of the step-down charging management module 23 is connected to the wound cell 531; an output power terminal of the step-down charging management module 23 is connected to the battery positive tab 532; a power terminal of the battery protection module 24 is connected to the battery positive tab 532 and the battery negative tab 533, and a battery voltage input terminal of the battery protection module 24 is connected to the wound cell 531.

As shown in FIG. 6, the step-down charging management module 23 includes a step-down charging management chip U1 and a filter circuit unit, wherein a model of the step-down charging management chip U1 is IP5167; and a battery voltage input pin of the step-down charging management chip U1 is connected to a positive electrode of the wound cell 531. The filter circuit unit includes a first filter capacitor C1, a second filter capacitor C2 and a first inductor L1. The battery voltage input pin of the step-down charging management chip U1 is connected in series with the first filter capacitor C1 and then grounded. An SW pin of the step-down charging management chip U1 is connected in series with the first inductor L1 and the second filter capacitor C2 in sequence and then grounded. A VOUT pin of the step-down charging management chip U1 is connected to the SW pin through the first inductor L1. When the step-down charging management chip U1 controls the charging of the lithium battery, it will change the current flowing from the inductor (the first inductor L1 in this embodiment) to the battery by adjusting the PWM signal on the SW pin. In a discharging state, the operation of the SW pin allows the current to flow from the battery to an external load while maintaining the stability of the output voltage.

Further, as shown in FIG. 6, an NTC pin of the step-down charging management chip U1 is further connected to an external NTC thermistor for detecting a temperature of the battery. When the temperature is detected to exceed a preset safety range, the IP5167 can take measures to limit the charging current, stop charging or cut off the output to avoid potential hazards. The SW pin is a switching node of the step-down charging management chip U1, and is responsible for current switching during charging and discharging processes. In the present application, a TVS diode is further connected to the SW pin to provide over-voltage protection for the lithium battery. During normal operation, the TVS diode is in a non-conducting state and will not affect the function of the SW pin. However, when the voltage on the SW pin exceeds a preset safety threshold, the TVS diode is immediately activated, clamping the voltage at a safe level and quickly releasing excess energy to the ground.

As shown in FIG. 6, the battery protection module 24 includes a battery protection chip U2 and a protective filter capacitor C4, wherein a model of the battery protection chip U2 is BP6452LC; a battery voltage input pin of the battery protection chip U2 is connected to the wound cell 531 and the step-down charging management module 23; a VDD pin of the battery protection chip U2 is connected to the battery positive tab 532; and a VCC pin of the battery protection chip U2 is connected in series with the protective filter capacitor C4 and is connected to the battery negative tab 533.

The implementation principle of the rechargeable lithium battery without a charging port in the present application is as follows: different from the prior art in which pogo pins are used to connect the voltage regulation circuit board 2 and the second negative electrode metal casing 51, the negative electrode copper ring 21 is arranged on the upper surface of the voltage regulation circuit board 2, and the voltage regulation circuit board 2 is welded to the inner side of the first flange 11 of the first negative electrode metal casing 1 by means of welding. In this way, the voltage regulation circuit board 2 is electrically connected to the second negative electrode metal casing 51 through the first negative electrode metal casing 1 in sequence, that is, electrically connected to the negative electrode of the lithium battery cell 5. Since a welding method is adopted, first of all, the electrical connection performance between the voltage regulation circuit board 2 and the first negative electrode metal casing 1 is very reliable, completely eliminating the technical problem of poor contact; secondly, there will be no gap between the first negative electrode metal casing 1 and the voltage regulation circuit board 2, no gluing is required, and the sealing effect can be achieved by solder; thirdly, the voltage regulation circuit board 2 is fixed very firmly, no insulating bracket needs to be arranged under the voltage regulation circuit board 2 for support, eliminating the insulating bracket, reducing the number of components, and eliminating a step of assembling the insulating bracket. More importantly, the height space occupied by the voltage regulation circuit board 2 is extremely compressed. The space originally occupied by the insulating bracket can be filled by increasing the length of the lithium battery cell 5. In this way, the capacity of the lithium battery cell 5 can be further increased, and the lithium battery has a larger capacity.

In another embodiment, referring to FIGS. 1 to 6, the present application discloses a method for manufacturing the rechargeable lithium battery without a charging port. The method includes the following steps:
S0.1: placing the wound cell assembly 53 into the second negative electrode metal casing 51, and fabricating the annular rolled groove 511 on the upper portion of the second negative electrode metal casing 51;
S0.2: welding the negative electrode tab of the wound cell assembly 53 to a bottom wall of the second negative electrode metal casing 51, and welding the positive electrode tab to the high-voltage positive electrode cap assembly 52;
S0.3: injecting electrolyte;
S0.4: placing the high-voltage positive electrode cap assembly 52 into the second negative electrode metal casing 51, and fabricating a contraction portion on the upper portion of the second negative electrode metal casing 51;
S0.5: fabricating a second flange 512 on an upper edge of the second negative electrode metal casing 51, and fixing the high-voltage positive electrode cap assembly 52 inside the contraction portion to form the lithium battery cell 5; and
S0.6: performing formation and capacity grading treatment on the lithium battery cell 5.

The first negative electrode metal casing 1 and the second negative electrode metal casing 51 are fixedly connected by spot welding or circumferential welding. Alternatively, a lower edge of the first negative electrode metal casing 1 can be contracted inwards to form a constricted opening to define the contraction portion of the second negative electrode metal casing 51.

Specifically, the method for manufacturing the rechargeable lithium battery without a charging port described in this embodiment includes the following steps:
S1: fabricating the first negative electrode metal casing 1 and forming a first flange 11 at the top of the first negative electrode metal casing 1;
S2: welding the voltage regulation circuit board 2 to the inner side of the first flange 11 of the first negative electrode metal casing 1;
S3: embedding the second negative electrode metal casing 51 into the first negative electrode metal casing 1, and then welding for fixation; wherein since a contraction portion is arranged at the upper end of the second negative electrode metal casing 51 in this embodiment, the first negative electrode metal casing 1 can just be sleeved into the contraction portion to ensure contact conduction. The first negative electrode metal casing 1 and the second negative electrode metal casing 51 can be completely fixed through spot welding or circumferential welding; if no contraction portion is arranged at the upper end of the second negative electrode metal casing 51, the second negative electrode metal casing 51 of the lithium battery cell 5 needs to be in butt-joint with the first negative electrode metal casing 1, and then the second negative electrode metal casing 51 and the first negative electrode metal casing 1 are welded for fixation;
S4: placing or pasting the low-voltage positive/negative electrode insulating spacer 6 on an outer side of the first flange 11 of the first negative electrode metal casing 1; and
S5: slipping an insulating housing 7 and performing heat shrinking on the insulating housing 7, such that the insulating housing 7 wraps around the low-voltage positive/negative electrode insulating spacer 6, the first negative electrode metal casing 1 and the lithium battery cell 5.

In order to better isolate the voltage regulation circuit board 2 from the lithium battery cell 5, prevent accidental short-circuit between the two, and ensure electrical safety, a step of pasting the high-voltage positive/negative electrode insulating spacer 8 onto the second flange 512 of the lithium battery cell 5 is further included between the step S2 and the step S3.

The method described in the present application features a rational process flow, a high yield rate, and industrial applicability, and is particularly suitable for large-scale production.

In this embodiment, in the step S2, the voltage regulation circuit board 2 can be welded to the inner side of the first flange 11 of the first negative electrode metal casing 1 by using a tin-melting soldering process or a wave soldering process.

The method of this embodiment features a rational process flow and a high yield rate, and can further enhance the capacity of the lithium battery cell, making it particularly suitable for large-scale industrial production.
The above embodiments are merely used for illustrating rather than limiting the technical solutions of the present application. Although the present application has been described in detail with reference to the foregoing embodiments, those skilled in the art should understand that they can still modify the technical solutions described in the foregoing embodiments, or make equivalent substitutions for some of the features. These modifications or substitutions do not cause the essence of the corresponding technical solutions to depart from the spirit and scope of the technical solutions of each embodiment of the present application, and shall be included within the protection scope of the present application.

## Claims

1. A rechargeable lithium battery without a charging port, **characterized by** comprising: a first negative electrode metal casing, a voltage regulation circuit board, a low-voltage positive electrode cap, a high-voltage positive electrode connector, a lithium battery cell and a low-voltage positive/negative electrode insulating spacer, wherein an upper end of the first negative electrode metal casing is inwardly provided with a first flange; an upper surface of the voltage regulation circuit board is provided with a negative electrode copper ring and a positive electrode copper ring; the voltage regulation circuit board is welded to an inner side of the first flange on the first negative electrode metal casing through the negative electrode copper ring; the voltage regulation circuit board is provided with a rechargeable circuit without a charging port; the low-voltage positive electrode cap is welded to the positive electrode copper ring; the high-voltage positive electrode connector is arranged on an inner surface of the voltage regulation circuit board; the lithium battery cell comprises a second negative electrode metal casing and a high-voltage positive electrode cap assembly, wherein the first negative electrode metal casing and the second negative electrode metal casing are electrically connected through butt joint or socket joint; the high-voltage positive electrode connector is in elastic contact with the high-voltage positive electrode cap assembly; and the low-voltage positive/negative electrode insulating spacer is arranged above the first flange of the first negative electrode metal casing.

2. The rechargeable lithium battery without a charging port according to claim 1, **characterized in that** the lithium battery cell further comprises a wound cell assembly; the wound cell assembly comprises a wound cell, a battery positive tab and a battery negative tab; the wound cell is welded to the high-voltage positive electrode cap assembly through the battery positive tab; the battery negative tab is wound from a side surface of the wound cell to a bottom surface and is connected to the wound cell; the rechargeable circuit without a charging port is provided with a step-down charging management module and a battery protection module; the step-down charging management module is connected to the battery protection module; a battery voltage input terminal of the step-down charging management module is connected to the wound cell; an output power terminal of the step-down charging management module is connected to the battery positive tab; a power terminal of the battery protection module is connected to the battery positive tab and the battery negative tab; and a battery voltage input terminal of the battery protection module is connected to the wound cell.

3. The rechargeable lithium battery without a charging port according to claim 2, **characterized in that** the step-down charging management module comprises a step-down charging management chip and a filter circuit unit, wherein a battery voltage input pin of the step-down charging management chip is connected to a positive electrode of the wound cell; the filter circuit unit comprises a first filter capacitor, a second filter capacitor and a first inductor; the battery voltage input pin of the step-down charging management chip is connected in series with the first filter capacitor and then grounded; a switch node (SW) pin of the step-down charging management chip is connected in series with the first inductor and the second filter capacitor in sequence and then grounded; and a voltage output (VOUT) pin of the step-down charging management chip is connected to the SW pin through the first inductor.

4. The rechargeable lithium battery without a charging port according to claim 3, **characterized in that** a model of the step-down charging management chip is IP5167.

5. The rechargeable lithium battery without a charging port according to claim 2, **characterized in that** the battery protection module comprises a battery protection chip and a protective filter capacitor; a battery voltage input pin of the battery protection chip is connected to the wound cell and the step-down charging management module; a voltage drain drain (VDD) pin of the battery protection chip is connected to the battery positive tab; and a voltage collector collector (VCC) pin of the battery protection chip is connected in series with the protective filter capacitor and is connected to the battery negative tab.

6. The rechargeable lithium battery without a charging port according to claim 5, **characterized in that** a model of the battery protection chip is BP6452LC.

7. The rechargeable lithium battery without a charging port according to claim 2, **characterized in that** an upper portion of the second negative electrode metal casing is defined with an annular rolled groove, and a top of the second negative electrode metal casing is provided with a second flange; the wound cell assembly is arranged in the second negative electrode metal casing and a position of the wound cell assembly is constrained by the annular rolled groove; the second negative electrode metal casing is divided by the annular rolled groove into a lower body portion and an upper contraction portion; an outer diameter of the first negative electrode metal casing is the same as that of the body portion of the second negative electrode metal casing; an inner diameter of the first negative electrode metal casing is the same as an outer diameter of the contraction portion of the second negative electrode metal casing; the contraction portion of the second negative electrode metal casing is embedded into the first negative electrode metal casing; and an outer surface of the first negative electrode metal casing is flush with an outer surface of the second negative electrode metal casing.

8. The rechargeable lithium battery without a charging port according to claim 2, **characterized in that** the high-voltage positive electrode connector is a pogo pin, a conical spring or an elastic shrapnel.

9. The rechargeable lithium battery without a charging port according to claim 1, **characterized by** further comprising an insulating housing, wherein the insulating housing encapsulates the first negative electrode metal casing, the second negative electrode metal casing and the low-voltage positive/negative electrode insulating spacer.

10. A method for manufacturing the rechargeable lithium battery without a charging port according to any one of claims 1 to 9, **characterized by** comprising the following steps:
fabricating the first negative electrode metal casing and forming the first flange at the top of the first negative electrode metal casing;
welding the voltage regulation circuit board programmed with the rechargeable circuit without a charging port to the inner side of the first flange of the first negative electrode metal casing;
butt-jointing the second negative electrode metal casing of the lithium battery cell with the first negative electrode metal casing, or embedding the second negative electrode metal casing into the first negative electrode metal casing, and then welding and fixing the first negative electrode metal casing and the second negative electrode metal casing;
placing or pasting the low-voltage positive/negative electrode insulating spacer on an outer side of the first flange of the first negative electrode metal casing; and
slipping the insulating housing and performing heat shrinking on the insulating housing, such that the insulating housing wraps around the low-voltage positive/negative electrode insulating spacer, the first negative electrode metal casing, and the lithium battery cell.
